# EUROPEAN PATENT SPECIFICATION

(11) **EP 3 682 700 B1**
(45) Date of publication and mention of the grant of the patent: **23.08.2023**
(21) Application number: 18769148.0
(22) Date of filing: 11.09.2018
(51) Int. Cl.: H04L 47/24, H04W 72/21

(54) **FAST TRANSMISSION OF SCHEDULING REQUEST**
SCHNELLE PLANUNGSANFORDERUNGSÜBERTRAGUNG
TRANSMISSION RAPIDE DE DEMANDE DE PROGRAMMATION

(30) Priority: 11.09.2017 US 201762557009 P
(43) Date of publication of application: 22.07.2020
(73) Proprietor: Telefonaktiebolaget LM Ericsson (publ), 164 83 Stockholm (SE)
(72) Inventor: BEHRAVAN, Ali, 113 36 Stockholm (SE); BALDEMAIR, Robert, 170 69 Solna (SE); PARKVALL, Stefan, 167 57 Bromma (SE); NORY, Ravikiran, San José CA 95134 (US); CHENG, Jung-Fu, Fremont CA 94539 (US); ZOU, Zhenhua, 171 42 Solna (SE); LARSSON, Daniel, 226 49 Lund (SE)
(74) Representative: Ericsson
(86) International application number: PCT/EP2018/074452
(87) International publication number: WO 2019/048702

(56) References cited:
- QUALCOMM INCORPORATED: "Simultaneous scheduling request and data transmission for uplink URLLC", 3GPP DRAFT; R1-1700828, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, Wa; 20170116 - 20170120 16 January 2017 (2017-01-16), XP051208347, Retrieved from the Internet: URL:http://www.3gpp.org/ftp/Meetings_3GPP_ SYNC/RAN1/Docs/ [retrieved on 2017-01-16]
- INTEL CORPORATION: "Uplink URLLC Transmission Based on Scheduling Request and Grant", 3GPP DRAFT; R1-1700376 INTEL - UL SR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 16 January 2017 (2017-01-16), XP051207913, Retrieved from the Internet: URL:http://www.3gpp.org/ftp/Meetings_3GPP_ SYNC/RAN1/Docs/ [retrieved on 2017-01-16]
- TEXAS INSTRUMENTS: "Sounding Reference Signal In Support of Scheduling Request in E-UTRA", 3GPP DRAFT; R1-081364_SRSRS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20080327, 27 March 2008 (2008-03-27), XP050109787, [retrieved on 2008-03-27]

## Description

### TECHNICAL FIELD

The present invention relates to a method implemented by a user equipment, a user equipment, and a computer program. The present disclosure relates generally to uplink transmission in a wireless communication network and, more particularly, to the transmission of scheduling requests for uplink transmissions.

### BACKGROUND

New radio (NR) standard under development by the Third Generation Partnership Project 3GPP is being designed to provide service for multiple use cases, such as Enhanced Mobile Broadband (eMBB), Ultra-Reliable and Low Latency Communication (URLLC), and Machine Type Communication (MTC). Each of these services has different technical requirements. For example, the general requirement for eMBB is high data rate with moderate latency and moderate coverage, while URLLC service requires a low latency and high reliability transmission with moderate data rates.

One of the solutions for providing low latency data transmission is shorter transmission time intervals. In NR, in addition to transmission in a slot, a mini-slot transmission is also allowed to reduce latency. A mini-slot may consist of any number of 1 to 14 Orthogonal Frequency Division Multiplexing (OFDM) symbols. It should be noted that the concepts of slot and mini-slot are not specific to a specific service meaning that a mini-slot may be used for either eMBB, URLLC, or other services.

Assume a scenario where a user equipment (UE) that is transmitting data in the uplink (UL) in a slot basis (e.g., eMBB data) on the Physical Uplink Shared Channel (PUSCH), and in the middle of slot-based PUSCH transmission some low latency data (e.g., URLLC data) arrives in the UE buffer and has to be sent with very short latency. In this case, the UE needs to send a scheduling request (SR) to obtain a scheduling grant for the low latency data.

When the resources for an ongoing slot-based PUSCH and a new mini-slot based SR are colliding, the information in one or potentially both channels are lost.

3GPP document R1-1700828, 3GPP TSG-RAN WG1 NR Ad-Hoc, 16th - 20th January 2017, entitled "Simultaneous scheduling request and data transmission for uplink URLLC", studied the need for scheduling requests for uplink URLLC.

### SUMMARY

The invention is set out in the appended set of claims.

The present disclosure describes methods and apparatus to handle a scheduling request for data with low latency requirements that is triggered during a slot-based PUSCH transmission. The summary of proposed solutions are as follows:
- If the SR periodicity is below a certain threshold, which means that the UE can send it within acceptable delay, then the UE does not interrupt PUSCH transmission and sends SR in the next available SR occasion. On the other hand, if the SR periodicity is above that threshold, then the UE preempts the ongoing PUSCH transmission and send SR right away.
- The threshold may be fixed or semi-statically configurable by the network.
- If the SR corresponds to certain logical channels, the UE preempts PUSCH to send SR. Otherwise it should wait until the ongoing PUSCH transmission is over and send SR after.
- Higher-layer signaling configures whether preemption is allowed or not.

The following aspects of the summary section are not according to the invention and are present for illustration purposes only.

One aspect of the disclosure comprise methods of fast SR transmissions implemented by a UE. In one embodiment, the method comprises determining, responsive to the arrival of new transmit data for transmission on an uplink shared channel, that a scheduling request to request uplink resources for transmission of the new transmit data will overlap a scheduled data transmission; preempting the scheduled data transmission to transmit the scheduling request; and transmitting the scheduling request to request uplink resources for the new transmit data.

Another aspect of the disclosure comprises a UE configured for fast SR transmissions. The UE is configured to determine, responsive to the arrival of new transmit data for transmission on an uplink shared channel, that a scheduling request to request uplink resources for transmission of the new transmit data will overlap a scheduled data transmission preempt the scheduled data transmission to transmit the scheduling request; and transmit the scheduling request to request uplink resources for the new transmit data.

Another aspect of the disclosure comprises a UE comprising an interface circuit for configured for communicating over a wireless communication channel with a base station and a processing circuit configured to implement fast SR transmission. The processing circuit configured to determine, responsive to the arrival of new transmit data for transmission on an uplink shared channel, that a scheduling request to request uplink resources for transmission of the new transmit data will overlap a scheduled data transmission; preempt the scheduled data transmission to transmit the scheduling request; and transmit the scheduling request to request uplink resources for the new transmit data.

Another aspect of the disclosure comprises a computer program product containing executable instructions that, when executed by a processing circuit in a user equipment in a wireless communication network, causes the user equipment to determine, responsive to the arrival of new transmit data for transmission on an uplink shared channel, that a scheduling request to request uplink resources for transmission of the new transmit data will overlap a scheduled data transmission preempt the scheduled data transmission to transmit the scheduling request; and transmit the scheduling request to request uplink resources for the new transmit data. In one embodiment, the computer program product is embodied in a non-transitory computer-readable medium. In other embodiments, the computer program product is embodied in a carrier, such as an electronic signal, optical signal, radio signal, or computer readable storage medium.

Another aspect of the disclosure comprises methods of fast SR transmissions implemented by a base station. In one embodiment, the method comprises receiving, from the user equipment (30, 200), a data transmission on an uplink shared channel; and blindly detecting a pre-emptive scheduling request from the user equipment (30, 200) on resources allocated for the data transmission.

Another aspect of the disclosure comprises a base station configured for fast SR transmissions. The base station is configured to receive, from the user equipment (30, 200), a data transmission on an uplink shared channel; and blindly detect a pre-emptive scheduling request from the user equipment (30, 200) on resources allocated for the data transmission.

Another aspect of the disclosure comprises a base station comprising an interface circuit configured for communicating over a wireless communication channel with a user equipment and a processing circuit configured to implement fast SR transmission. More particularly, the processing circuit is configured to receive, from the user equipment (30, 200), a data transmission on an uplink shared channel; and blindly detect a pre-emptive scheduling request from the user equipment (30, 200) on resources allocated for the data transmission.

Another aspect of the disclosure comprises a computer program product containing executable instructions that, when executed by a processing circuit in a base station in a wireless communication network, causes the base station to receive, from the user equipment (30, 200), a data transmission on an uplink shared channel; and blindly detect a pre-emptive scheduling request from the user equipment (30, 200) on resources allocated for the data transmission.. In one embodiment, the computer program product is embodied in a non-transitory computer-readable medium. In other embodiments, the computer program product is embodied in a carrier, such as an electronic signal, optical signal, radio signal, or computer readable storage medium.

### BRIEF DESCRIPTION OF THE DRAWINGS

Figure 1 illustrates communications between a base station and a UE in a wireless communication network.
Figure 2 illustrates radio resources used for communications between a base station and a UE in a wireless communication network.
Figure 3 illustrates SR transmission.
Figure 4 illustrates an exemplary method of scheduling request transmission implemented by a UE.
Figures 5A and 5B illustrate another exemplary method of scheduling request transmission implemented by a UE.
Figure 6 illustrates an example UE configured according to embodiments of the present disclosure.
Figure 7 illustrates an exemplary method of scheduling request transmission implemented by a base station.
Figure 8 illustrates an example base station configured according to embodiments of the present disclosure.

### DETAILED DESCRIPTION

Referring now to the drawings, an exemplary embodiment of the present disclosure will be described in the context of Fifth Generation (5G) and Next Radio (NR) communication network configured for eMBB communications, URLLC, and MTC. Those skilled in the art will appreciate that the techniques described herein are more generally applicable to any wireless communication network in which the UE performs radio link monitoring. The preemption techniques herein described can be easily adapted by those skilled in the art for use in communication networks based on other radio access technologies (RATs), such as Long Term Evolution (LTE) networks, Wideband Code Division Multiple Access (WCDMA) networks, Code Division Multiple Access (CDMA) 2000 networks, Wireless Fidelity (WiFi) networks, Worldwide Interoperability for Microwave Access (WiMAX) networks, Wireless Local Area Networks (LANs) (WLANs), Narrowband Internet of Things (NB-loT) networks, or other wireless communication networks using shared uplink channels.

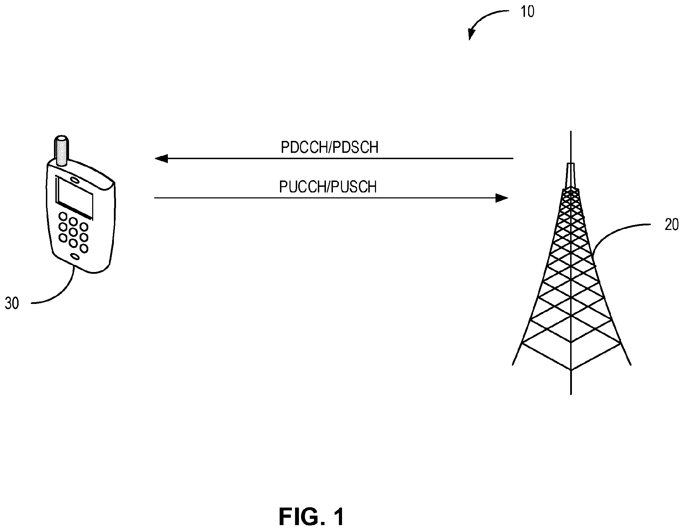

Figure 1 illustrates communications between a base station 20 and a UE 30 in a wireless communication network 10. The base station 20 is commonly referred to in applicable standards as a Node B (NB), Evolved Node B (eNB) or 5G Node B (gNB). The UE 30 comprises any type of wireless device that communicates over a wireless channel with the base station 20. For example, the UE 30 may comprise a cellular telephone, smart phone, laptop computer, tablet, MTC device, or other device capable of communicating over the wireless channel with the base station 20.

The base station 20 transmits control information to the UE 30 on the Physical Downlink Control Channel (PDCCH), and user data to the UE 30 on the Physical Downlink Shared Channel (PDSCH). The UE 30 transmits control information to the base station 20 on the Physical Uplink Control Channel (PUCCH), and user data to the base station 20 on the PUSCH. The base station 20 is responsible for scheduling UL transmissions from the UE 30 and for allocating resources for the UL transmissions. After scheduling an UL transmission and allocating resources, the base station 20 sends a scheduling grant (SG) to the UE 30 indicating the resources on which the UE 30 has been scheduled and the transmission format for the scheduled transmission. The uplink grant is sent to the UE 30 on the PDCCH. After receiving the uplink, the UE 30 determines the UL transmit power for the transmission and transmits data to the base station 20 on the PUSCH resources indicated in the SG.

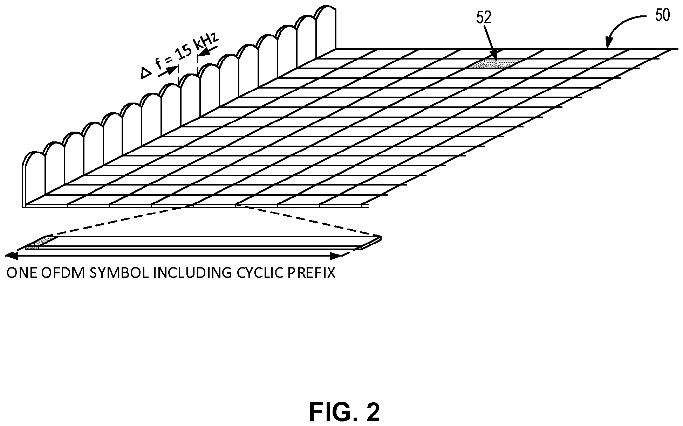

The available radio resources for uplink transmissions can be viewed as a time-frequency grid 50 as shown in Figure 2. In the time domain, the physical resources are divided into subframes. Each subframe includes a number of symbols (e.g., OFDM symbols for the downlink and SC-FDMA symbols for the uplink). For a normal Cyclic Prefix (CP) length, suitable for use in situations where multipath dispersion is not expected to be extremely severe, a subframe comprises fourteen symbols. A subframe comprises twelve symbols if an extended CP is used. In the frequency domain, the physical resources are divided into adjacent subcarriers with a spacing of 15 kHz. The number of subcarriers varies according to the allocated system bandwidth. A subframe typically comprises two time slots, which may be further subdivided into mini-slots. A mini-slot comprises one or more symbol periods in a time slot. The smallest element of the time-frequency grid 50 is a Resource Element (RE) 52.

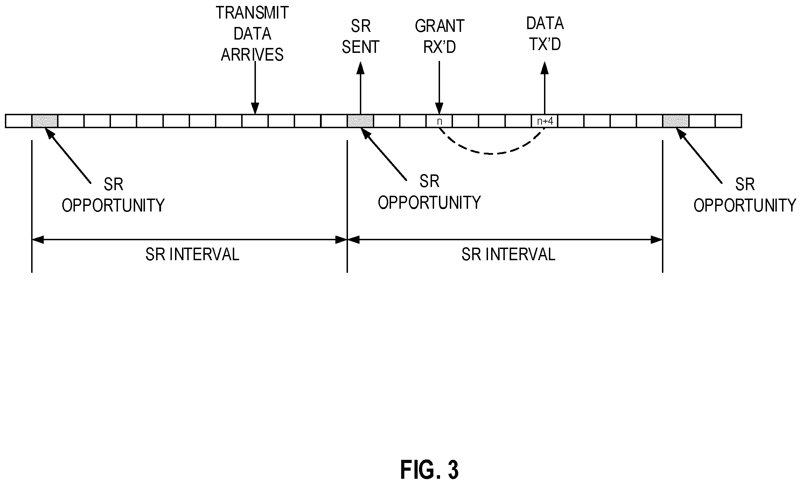

Figure 3 illustrates uplink scheduling in 5G and NR networks. The UE 30 is allocated resources for sending SRs to the base station 20. The SRs may be sent at a predetermined time interval referred to as the SR interval. The SR interval may, for example, comprise a predetermined number of subframes, time slots, or mini-slots. When data that needs to be transmitted arrives at the transmit buffer of the UE 30, the UE 30 sends a SR to the base station 20 on the PUCCH to request resources for an uplink transmission on the PUSCH. In response to the SR, the base station 20 sends a SG to the UE 30 on the PDCCH. The SG indicates the PUSCH resources for the uplink transmission and the transport format for the data transmission. The UE 30 transmits the data on the allocated uplink resources.

In 5G and NR communication networks 10, the UE 30 may be allocated different SR resources for different services or groups of services. For example, the UE 30 may be allocated a first set of SR resources for eMBB services and a second set of resources for URLLC services. The SR intervals for the first and second sets of SR resources may be different. For example, services requiring lower latency (e.g., URLLC services) may have a shorter SR interval than services with less stringent latency requirements.

In some instances, data for transmission to the base station 20 may arrive at the transmit buffer while lower priority data is being transmitted. In this case, the UE 30 needs to send a SR to the base station 20 to request resources for transmitting the higher priority data. Conventionally, the UE 30 transmits the SR at the next available opportunity. However, the next available opportunity may occur while a previously scheduled transmission is ongoing. Depending on Quality of Services (QoS) requirements, the UE 30 may not be able to wait for the competition of the scheduled transmission to send the SR.

In exemplary embodiments of the disclosure, a SR mechanism is provided to preempt a scheduled data transmission in order to send a SR. Preemption in this context can refer to at least two possible transmission scenarios that can potentially impact an on-going data transmission negatively. In a first scenario, the radio resources for transmitting the SR and the on-going UL transmission overlap in time domain but do not overlap in frequency domain. In this scenario, the UE 30 may continue the ongoing UL transmission while simultaneously transmitting the SR. However, given limited UE transmission power, the UE 30 may need to reduce the transmission power for the on-going UL transmission in order to have enough power for reliable SR transmission. For example, if the ongoing UL transmission is a PUSCH transmission, for lower order modulations, the power reduction can cause PUSCH transmission performance degradation. In addition, if the UE power amplifier phase changes, an earlier obtained channel estimate may no longer be valid making demodulation difficult/impossible. For higher order modulations, this power reduction can cause the magnitude reference for the demodulator to misalign and result in erroneous demodulation of all REs in the impacted OFDM symbol. As described above, phase changes may also occur that may cause several PUSCH transmission failures. In a second scenario, the radio resources for transmitting the SR and the on-going UL transmission overlap in both time and frequency domain. In this scenario, the preempting SR transmission will take away radio resources as well as power from the on-going UL transmission. The second scenario is more likely to cause failure of the on-going UL transmission than the first scenario.

### Preemption Based on Priority

According to one aspect of the disclosure, whether the UE 30 preempts an ongoing PUSCH transmission to send SR depends on some measure of the priority of the service. As an example, if the SR corresponds to certain logical channels with high priority, the UE 30 preempts PUSCH to send SR, and otherwise waits until the ongoing PUSCH transmission is over and send SR after. The UE 30 typically does that if the SR request has a higher priority than PUSCH priority. The priority of SR may also depend on certain transmission profiles.

In one embodiment, the SR preemption of a PUSCH transmission would depend on the content of the PUSCH transmission. If the PUSCH transmission contains traffic of equal or higher priority of that of the SR, the SR does not preempt the PUSCH while if the PUSCH transmission contains lower priority traffic the SR can preempt the PUSCH transmission.

In one exemplary embodiment, a UE 30 can be configured with a first SR configuration corresponding to a first set of SR resources and a second SR configuration corresponding to a second set of SR resources. The first SR configuration is associated with at least a first logical channel or first group of logical channels, and the second SR configuration is associated with at least a second logical channel or group of logical channels. The second logical channel (or logical channel group) has higher priority than the first logical channel (or logical channel group). The first and/or second sets of SR resources may comprise PUCCH resources (e.g., short PUCCH resources) that occur periodically.

When a SR corresponding to the first logical channel is triggered (e.g., when the UE 30 determines that it has UL data that it needs to transmit and the data is mapped to first logical channel), the UE 30 determines a SR resource from the first set of SR resources such that a SR transmission by the UE 30 on that SR resource does not overlap in time with another ongoing UL transmission by the same UE 30, and transmits a SR on that SR resource. When a SR corresponding to the second logical channel is triggered (e.g., when the UE 30 determines that it has UL data that it needs to transmit and the data is mapped to second logical channel), the UE 30 determines an earliest available SR resource from the second set of SR resources, and transmits SR on that SR resource. If the UE 30 has an ongoing UL transmission that overlaps in time with the earliest available SR resource, the UE 30 transmits the SR on that SR resource by preempting the ongoing UL transmission.

The earliest available SR resource may be determined in a number of different ways. For example, the earliest available SR resource may comprise:
- the earliest SR resource from the second set of SR resources after the SR corresponding to the second logical channel is triggered; or
- the earliest SR resource from the second set of SR resources after the SR corresponding to the second logical channel is triggered, such that it does not overlap (either in time or time and frequency) with an ongoing PUCCH transmission (e.g., long PUCCH transmission) by the same UE 30; or
- the earliest SR resource from the second set of SR resources after the SR corresponding to the second logical channel is triggered, such that it does not overlap with a OFDM symbol reserved for Demodulation Reference Signal (DMRS) transmission corresponding to an ongoing PUSCH transmission by the same UE 30; or
- the earliest SR resource from the second set of SR resources after the SR corresponding to the second logical channel is triggered, such that it does not overlap with an ongoing PUSCH transmission by the same UE 30, where the PUSCH transmission carries data mapped to a logical channel with equal or higher priority than the priority of the second logical channel.

The earliest available SR resource can be determined by any one or more of the above criteria.

When a SR is triggered for the UE 30 at time T0 (e.g., corresponding to the first logical channel or the second logical channel), and if the first available SR resource (e.g., corresponding to the first SR configuration or the second SR configuration respectively as discussed above) after time T0 + T_proc, overlaps with a new PUSCH transmission (i.e., the PUSCH transmission starts after time T0 + T_proc), the UE 30 can transmit a new Buffer Status Report (BSR) in the new PUSCH transmission and reset the SR trigger. Here, T_proc is a processing delay allowance given to the UE 30. The processing delay T_proc can be equal to the minimum allowed delay between reception of UL grant and corresponding PUSCH transmission).

### Preemption Based on Periodicity of the SR Interval

According to one aspect of the disclosure, the UE 30 may preempt an ongoing PUSCH transmission to send a high priority SR or wait until the next occasion for SR transmission depending on SR periodicity. For example, if the SR periodicity is below a certain threshold, i.e., there are frequent SR opportunities so that the UE 30 can send the SR within acceptable delay, the UE 30 does not interrupt the PUSCH transmission and sends SR in the next available SR occasion. On the other hand, if the SR periodicity is above that threshold, i.e., very infrequent, the UE 30 preempts the ongoing PUSCH transmission and sends the SR at the earliest opportunity. In one embodiment, the threshold can be scaled according to the remaining transmission duration of the PUSCH when the SR is triggered.

In another embodiment, preemption may depend on the remaining duration of the ongoing PUSCH transmission. If the remaining time is large, e.g., scheduled by a slot-aggregation transmission, then it could correspond to a long waiting time for the next SR and preemption should be triggered. If the remaining time is small, then the next SR opportunity can be close, and a preemption should not be triggered. This also has the advantage of not destroying an already received majority part of the transport block.

In one embodiment, the UE 30 uses the periodicity of the SR interval and the remaining duration of the ongoing PUSCH transmission in combination to determine preemption. For example, if the SR periodicity is below a certain threshold and the remaining duration of the ongoing PUSCH transmission is short so that the UE 30 can send the SR within acceptable delay, the UE 30 does not interrupt the PUSCH transmission and sends SR in the next available SR occasion after the ongoing PUSCH transmission is complete. On the other hand, if the SR periodicity is below a certain threshold but the remaining duration of the ongoing PUSCH transmission is long so that the UE 30 cannot send the SR within acceptable delay, the UE 30 interrupts the PUSCH transmission and sends SR in the next available SR occasion after the ongoing PUSCH transmission is complete.

In one embodiment, frequent SR opportunities is interpreted by the UE 30 as an indication of stringent latency requirements and the UE 30 preempts ongoing PUSCH transmissions when the periodicity is less than the threshold (the opposite of the previous example). In this case, infrequent SR opportunities (an interval greater than the threshold) would indicate a delay-tolerant traffic and no need to preempt an ongoing PUSCH transmission.

In the embodiments described above, the threshold for SR periodicity above which the ongoing PUSCH preempted may be fixed or semi-statically configurable by the network 10. Similarly, the time limit for the remaining duration may be fixed or semi-statically configurable by the network 10.

In one embodiment the UE 30 is configured with a periodic SR opportunity with periodicity T_SR and a maximum allowable delay T_max until when an SR must be sent after it has been triggered at time t_0 . The SR opportunities occur at T_SR+nT_SR. When no other transmission is ongoing, the UE 30 can use the next SR resource at time T_SR+n'T_SR > t_0 after the SR has been triggered. If another transmission is ongoing at the next SR opportunity, T_SR+n'T_SR, the UE 30 uses the next SR opportunity at T_SR+n'T_SR only if:
1) T_SR+(n'+1)T_SR > t_0+T_max (i.e., the next opportunity comes too late); and
2) the already ongoing data transmission is of lower priority than the SR trigger reason.

Otherwise, the UE 30 postpones the SR until the next SR opportunity at T_SR+(n'+1) T_SR. At SR opportunity T_SR+(n'+1)T_SR, the UE 30 applies the same procedure, i.e., it transmits the SR if there is no ongoing data transmission or the next SR opportunity, T_SR+(n'+2)T_SR > T_SR+T_max, is too late and the ongoing data transmission is of lower priority. If a UE 30 postpones its SR transmission, the UE 30 can also send a buffer status report if it is scheduled on PUSCH after SR has been triggered. In this case, the UE 30 does not need to transmit an SR.

### Static Configuration of Preemption

In another embodiment, semi-static signaling may be used to indicate whether the UE 30 is allowed to preempt an ongoing PUSCH transmission to transmit an SR. If allowed, an SR can in such a case always preempt an ongoing PUSCH transmission. Further the UE 30 may also be configured so that an SR of a short time duration can preempt an ongoing PUCCH transmission. This configuration maybe a separate configuration than the PUSCH configuration.

### SR Configurations

Another aspect of the disclosure relates to SR configuration including supported periodicity values for SR and related signaling. Multiple SR configurations can be supported. Also, periodicity values as short as 1 OFDM can be supported. SR configuration can be configured by Radio Resource Control (RRC) signaling or other higher layer signaling.

For SR configured on long-PUCCH, in addition to the periodicities supported for LTE, some additional periodicities depending on slot duration for higher SCS cases can be supported as shown in Table 1 below.

**Table 1- Supported long-PUCCH based SR periodicities for NR**

| **Subcarrier spacing (kHz)** | **Supported SR periodicity (ms)** |
|---|---|
| 15 | 1,2,5,10,20,40,80 |
| 30 | 0.5,1,2,5,10,20,40,80 |
| 60 | 0.25,0.5,1,2,5,10,20,40,80 |
| 120 | 0.125,0.25,0.5,1,2,5,10,20,40,80 |
| 240 | 0.0625,0.125,0.25,0.5,1,2,5,10,20,40,80 |
| 480 | 0.0625,0.125,0.25,0.5,1,2,5,10,20,40,80 |

Configuration of long-PUCCH based SR resources can follow the same approach as LTE, i.e., a SR periodicity and offset is mapped to a SR resource index signaled by higher layers (e.g., RRC signaling) to identify the slots for SR transmission. In addition, the PUCCH resource to be used for SR transmission can be configured by higher layers. For larger subcarrier spacing (SCS), it may be enough to support SR offsets with coarser granularity than slot duration, especially for SR periodicities spanning multiple milliseconds, e.g., for 120 kHz SCS case. For SR periodicity of 10ms, it may be sufficient to support offsets with 0.5ms granularity instead of supporting every possible offset with 0.125 ms granularity.

For short-PUCCH based SR, in addition to identifying the slots containing SR resources, additional signaling can be used to identify the OFDM symbols within the slot that are configured as SR resources. To achieve this a bitmap with length same as the number of OFDM symbols per slot (i.e., 14 bits) can be used. This bitmap would enable most generic signaling to cover all possible cases. For example, for 30kHz FDD, a UE can be configured with 2 short-PUCCH based SR configurations, one for regular traffic with 5ms slot periodicity and last OFDM symbol in each slot (indicated by 00000000000001 in the bitmap) and another for latency sensitive traffic with 0.5ms slot periodicity and all OFDM symbols in the slot (indicated by 11111111111111 in the bitmap).

As an example, SR resources can be configured as follows in an embodiment.
- For long-PUCCH based SR, higher layers configure the following:
   o A SR configuration index (that corresponds to a SR periodicity and slot offset) which identifies the slots to be used for SR transmission.
   ∘ A long-PUCCH resource index which identifies the long PUCCH resource to use for SR transmission within the identified slots.
- For short-PUCCH based SR, higher layers configure the following:
   o A SR configuration index (that corresponds to a SR periodicity and slot offset) which identifies the slots to be used for SR transmission.
   ∘ A 14 bit bitmap (i.e., slot length) that identifies OFDM symbol(s) to be used for SR transmission within the slots identified by the SR configuration index
   o A short-PUCCH resource index which identifies the short-PUCCH resource to use for SR transmission within the identified OFDM symbols.
- For SR periodicity, in addition to the periodicities supported for LTE, additional more frequent periodicities can be supported for higher SCS cases.
   ∘ For higher SCS, only a subset of SR offsets with coarser granularity than slot duration should be supported especially for SR periodicities spanning multiple milliseconds.

Another aspect to consider arises in cases where a short-PUCCH based SR is triggered but the UE has an ongoing long-PUCCH/PUSCH transmission and an SR resource is available for UE before the end of ongoing transmission. For such cases, UE should transmit SR in the first available SR resource without an ongoing transmission. If the UE has PUSCH immediately scheduled after the ongoing transmission, it can send a BSR on the PUSCH.

### Base Station Processing

When there is on ongoing PUSCH transmission in a slot where a SR transmission opportunity for the UE exists, and SR pre-emption is allowed, the base station performs blind detection of the SR. In one embodiment, the base station 20 performs blind SR detection before processing the received PUSCH. In another embodiment, blind detection is performed while receiving the PUSCH transmission. In this case, the PUSCH is reprocessed responsive to the detection of an SR.

According to some embodiments, the base station performs blind detection by correlating the signal received on REs corresponding to a SR transmission opportunity and comparing the correlation result to a threshold to determine whether an SR is present.

According to another embodiment, the base station 20 performs blind detection by decoding the signal received on the REs corresponding to a SR transmission opportunity and performs error detection (e.g., CRC check) on the decoded signal to determine whether an SR is present.

In a further embodiment, after an SR is detected, the BS sets the symbols of the received data transmission corresponding to the REs on which the SR was received to zero such that these received REs do not affect the decoding and reception of the PUSCH.

### Example Methods of Preemption

When UE 30 determines a need to preempt the on-going PUSCH transmission, several enhanced preemption methods may be used as described below.

When it is necessary to reduce transmission power for the on-going PUSCH transmission to accommodate the SR transmission, the UE 30 may reduce a number of transmitted PUSCH REs such that the remaining transmitted PUSCH REs retain the same transmission power per RE as that for PUSCH REs in the other OFDM symbols not impacted by preemption. As one non-limiting example, assume that the PUSCH transmission has 1200 REs in one OFDM symbol. If it is determined that a 10% power reduction is needed to transmit the SR, rather than reduce the transmit power in all REs, the UE 30 may transmit in fewer REs while maintaining the power per RE. In this example, the UE 30 reduces the number of REs for the ongoing data transmission to 1080 (1200×0.9 = 1080 REs), which it transmits with the same power per RE instead of transmitting 1200 REs with 90% power per RE.

Since channel coded bits may be transmitted in sequence in the frequency domain, The PUSCH REs to be removed from transmission can be spread out in frequency domain to avoid localized removal of PUSCH. Continuing with the previous non-limiting example, 120 REs need to be removed from the PUSCH transmission. Instead of removing RE #0, #1, ..., #119, the REs to be removed are spread across the frequency domain by removing every 10^{th} RE (e.g., RE #0, #10, #20, ..., #1190). The REs do not need to be equally spaced in the frequency domain. The main point is to spread out the removed REs in the frequency domain.

When the radio resources of the SR and the PUSCH overlap, part of the removed REs can be used by the UE 30 to transmit the SR with the remaining removed REs spread over the non-overlapping part of the PUSCH. Continuing with the previous non-limiting example, assume that 120 REs need to be removed from the PUSCH transmission and the SR transmission overlaps with the PUSCH in the first 12 REs. That is, SR will be transmitted in REs #0, #1, ..., #11. In this example, the remaining 120-12=108 REs are spread over 1200-12=1188 PUSCH REs not used for transmitting the SR. Thus, the UE 30 removes, for example, REs #22, #33, ..., #1177. Other specific locations are possible since the main point is to spread out the removed REs in the portion of the frequency domain not overlapping with the SR transmission.

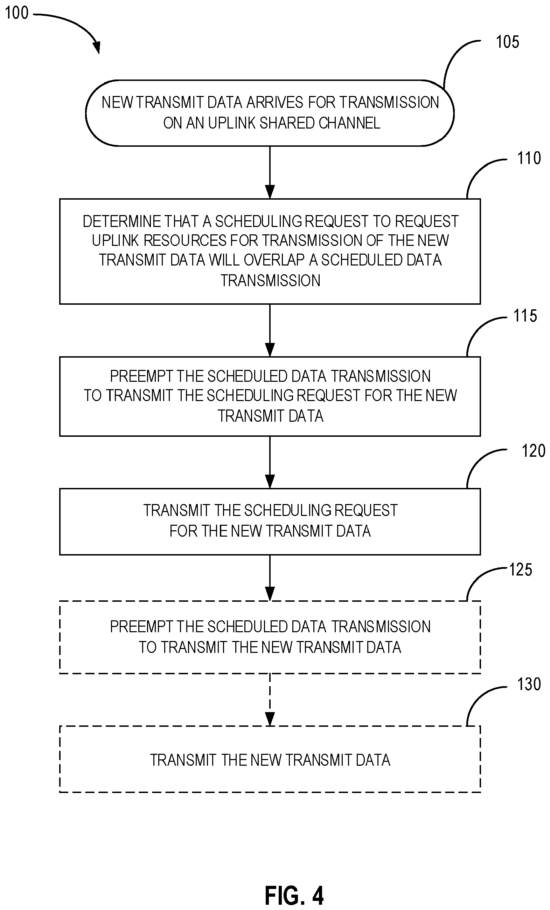

Figure 4 illustrates an exemplary method 100 implemented by a UE 30 according to one embodiment. The method 100 begins when new transmit data arrives in the transmit buffer of the UE 30 that needs to be transmitted (block 105). For example, the new transmit data may comprises data for transmission on the PUSCH or other shared uplink channel. Responsive to the arrival of new transmit data for transmission on an uplink shared channel, the UE 30 determines that a scheduling request to request uplink resources for transmission of the new transmit data will overlap a scheduled data transmission (block 110). The scheduled data transmission may comprise a PUSCH transmission. Once it is determined that the transmission of the SR will overlap the scheduled data transmission (e.g., PUSCH transmission), the UE 30 preempts the scheduled data transmission to transmit the SR (block 115), and transmits the scheduling request to request uplink resources for the new transmit data (block 120). The transmission of the SR may use some of the resources allocated for the scheduled data transmission (i.e., preempted resources) that have been freed up by preempting the scheduled data transmission.

In some embodiments of the method 100, the UE 30 may also preempt the scheduled data transmission to transmit the new transmit data (blocks 125 and 130). For example, the UE 30 may preempt a scheduled data transmission on the PUSCH of relatively lower priority data to transmit new transmit data of higher priority on the PUSCH.

In some embodiments of the method 100, preemption of the scheduled transmission may optionally be conditioned on one or more predetermined criteria. In this case, the UE 30 determines that the one or more predetermined criteria are met before preempting the scheduled transmission. In one embodiment, the UE 30 preempts the scheduled data transmission responsive to determining that the new transmit data has higher priority than the scheduled uplink transmission. In another embodiment, the UE 30 preempts the scheduled data transmission responsive to determining that a periodicity of a SR interval meets a threshold requirement. In another embodiment, the UE 30 preempts the scheduled data transmission responsive to determining that a remaining duration of the scheduled transmission is less than a predetermined time limit. In another embodiment, the UE 30 preempts the scheduled data transmission responsive to determining that a periodicity of the SR interval is less than a threshold, and a remaining duration of the scheduled transmission is less than a predetermined time limit. In another embodiment, the UE 30 preempts the scheduled data transmission responsive to determining, based on configuration data, that preemption is allowed.

In one embodiment of the method 100, the UE 30 preempts the scheduled data transmission depending on a priority of the new transmit data. For example, the UE 30 may preempt the scheduled data transmission responsive to determining that the new transmit data has higher priority than the scheduled uplink transmission.

In one embodiment of the method 100, the UE 30 preempts the scheduled data transmission depending on a periodicity of a SR interval. For example, the UE 30 may preempt the scheduled data transmission responsive to determining that the periodicity of the SR interval meets a threshold requirement. As another example, the UE 30 may preempt the scheduled data transmission responsive to determining that the periodicity of the SR interval is less than a first threshold, and a remaining duration of the scheduled transmission is less than a predetermined time limit.

In some embodiments of the method 100, preempting the scheduled data transmission to transmit the SR comprises reducing the transmit power allocated for the scheduled transmission. In order to reduce the transmit power for the scheduled data transmission, the UE 30 may reduce a number of resource elements allocated for the scheduled transmission while maintaining a power per resource element for the scheduled transmission. In this case, the UE 30 may use the preempted resource elements no longer being used for the scheduled uplink transmission.

In some embodiments of the method 100, preempting the scheduled data transmission to transmit the scheduling request comprises reducing a number of resource elements allocated for the scheduled transmission. In this case, the UE 30 may use the preempted resource elements no longer being used for the scheduled uplink transmission.

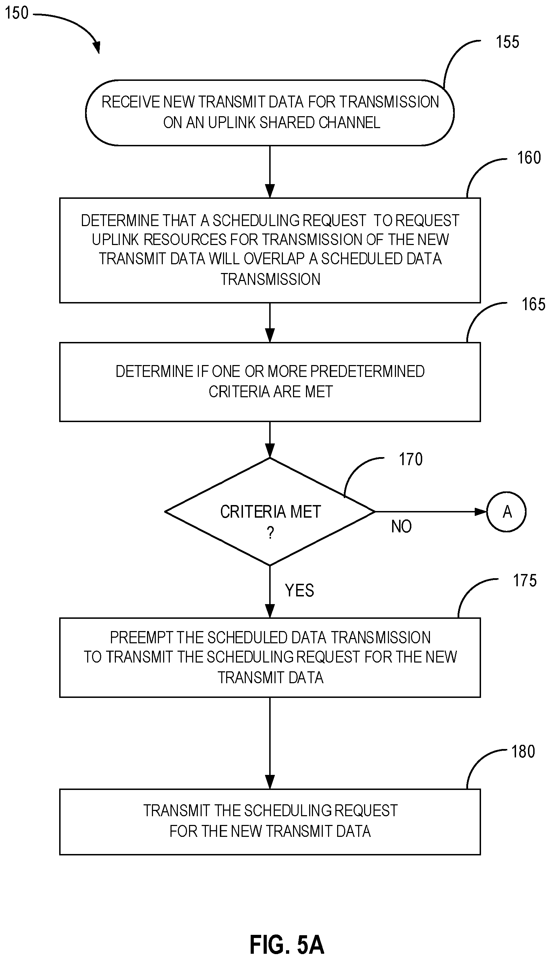

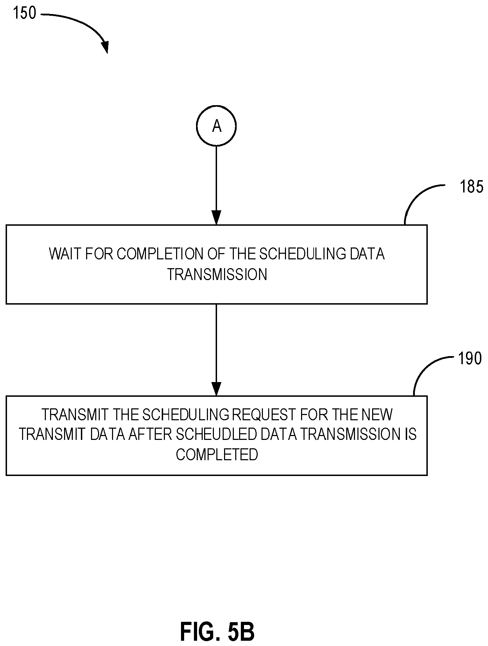

Figures 5A and 5B illustrate another exemplary method 150 where preemption of a scheduled transmission is conditioned on one or more predetermined criteria being met. The method 150 begins when new transmit data arrives in the transmit buffer of the UE 30 that needs to be transmitted (block 155). For example, the new transmit data may comprises data for transmission on the PUSCH or other shared uplink channel. Responsive to the arrival of new transmit data for transmission on an uplink shared channel, the UE 30 determines that a scheduling request to request uplink resources for transmission of the new transmit data will overlap a scheduled data transmission (block 160). The scheduled data transmission may comprise a PUSCH transmission. Once it is determined that the transmission of the SR will overlap the scheduled data transmission (e.g., PUSCH transmission), the UE 30 determines whether one or more predetermined criteria are met (block 165). The predetermined criteria may be based on one or more of the following: priority of the new transmit data, length of the SR interval, remaining duration of the scheduled data transmission, and a predetermined SR configuration. If the UE determines that the predetermined criteria is met (block 170), the UE 30 preempts the scheduled data transmission to transmit the SR (block 175), and transmits the scheduling request to request uplink resources for the new transmit data (block 180). The transmission of the SR may use some of the resources allocated for the scheduled data transmission (i.e., preempted resources) that were freed up by the preemption. If the predetermined criteria are not met, the UE 30 waits for the completion of the scheduled data transmission (block 185) and transmits the SR after the competition of the scheduled data transmission (block 190).

In some embodiments of method 150, the UE 30 preempts the scheduled data transmission responsive to determining that the new transmit data has higher priority than the scheduled uplink transmission.

In another embodiment of method 150, the UE 30 preempts the scheduled data transmission responsive to determining that a periodicity of a SR interval meets a threshold requirement.

In another embodiment of method 150, the UE 30 preempts the scheduled data transmission responsive to determining that a remaining duration of the scheduled transmission is less than a predetermined time limit.

In another embodiment of method 150, the UE 30 preempts the scheduled data transmission responsive to determining that a periodicity of the SR interval is less than a threshold, and a remaining duration of the scheduled transmission is less than a predetermined time limit.

In another embodiment of method 150, the UE 30 preempts the scheduled data transmission responsive to determining, based on configuration data, that preemption is allowed.

In some embodiments of the method 150, preempting the scheduled data transmission to transmit the SR comprises reducing the transmit power allocated for the scheduled transmission. In order to reduce the transmit power for the scheduled data transmission, the UE 30 may reduce a number of resource elements allocated for the scheduled transmission while maintaining a power per resource element for the scheduled transmission. In this case, the UE 30 may use the preempted resource elements no longer being used for the scheduled uplink transmission.

In some embodiments of the method 150, preempting the scheduled data transmission to transmit the scheduling request comprises reducing a number of resource elements allocated for the scheduled transmission. In this case, the UE 30 may use the preempted resource elements no longer being used for the scheduled uplink transmission.

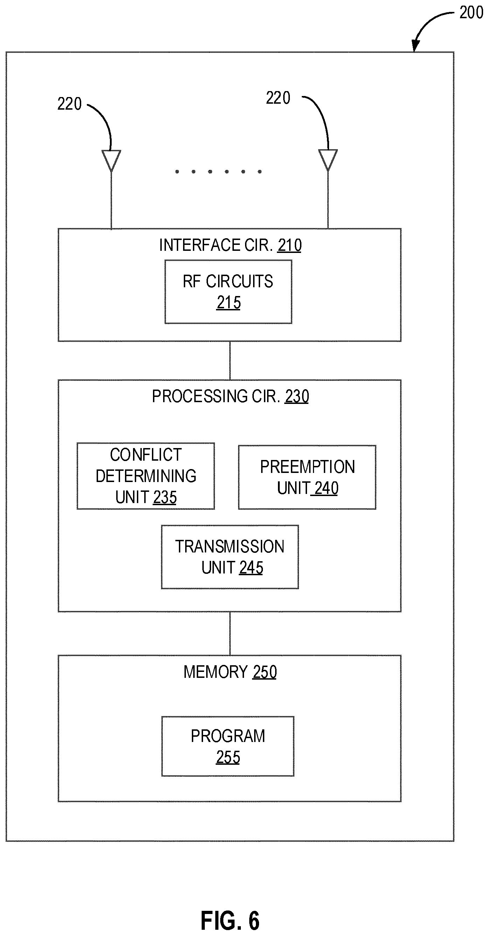

Figure 6 illustrates an embodiment of a UE 200 configured to implement the fast SR transmission methods described above. The UE 200 comprises an interface circuit 210, a processing circuit 230, and memory 250.

The interface circuit 210 is coupled to one or more antennas or antenna elements 220. The interface circuit 210 includes the Radio Frequency (RF) components needed for communicating with the base station 20 over a wireless communication channel. Typically, the RF components includes transmit circuitry and receive circuitry adapted for communications according to the 5G and/or NR standards or other RAT.

The processing circuit 230 processes the signals transmitted to or received by the UE 200. Such processing includes coding and modulation of transmitted signals, and the demodulation and decoding of received signals. The processing circuit 230 includes a conflict determining unit 235 for determining whether a SR triggered by the arrival of new transmit data overlaps a scheduled data transmission, a preemption unit 240 for preempting the scheduled data transmission to transmit the SR, and a transmitting unit 245 for transmitting the SR. In some embodiments, the preemption unit 240 also determines whether predetermined criteria for preemption are met. The processing circuit 230 may comprise one or more microprocessors, hardware, firmware, or a combination thereof. In one embodiment, the synchronization unit 415 and random access unit 425 are implemented by a single microprocessor. In other embodiments, the synchronization unit 415 and random access unit 425 are implemented using different microprocessors.

Memory 250 comprises both volatile and non-volatile memory for storing computer program code and data needed by the processing circuit 230 for operation. Memory 250 may comprise any tangible, non-transitory computer-readable storage medium for storing data including electronic, magnetic, optical, electromagnetic, or semiconductor data storage. Memory 250 stores a computer program 255 comprising executable instructions that configure the processing circuit 230 to implement methods 100 according to Figure 4 as described herein. In general, computer program instructions and configuration information are stored in a non-volatile memory, such as a read only memory (ROM), erasable programmable read only memory (EPROM) or flash memory. Temporary data generated during operation may be stored in a volatile memory, such as a random access memory (RAM). In some embodiments, computer program 255 for configuring the processing circuit 230 as herein described may be stored in a removable memory, such as a portable compact disc, portable digital video disc, or other removable media. The computer program 255 may also be embodied in a carrier such as an electronic signal, optical signal, radio signal, or computer readable storage medium.

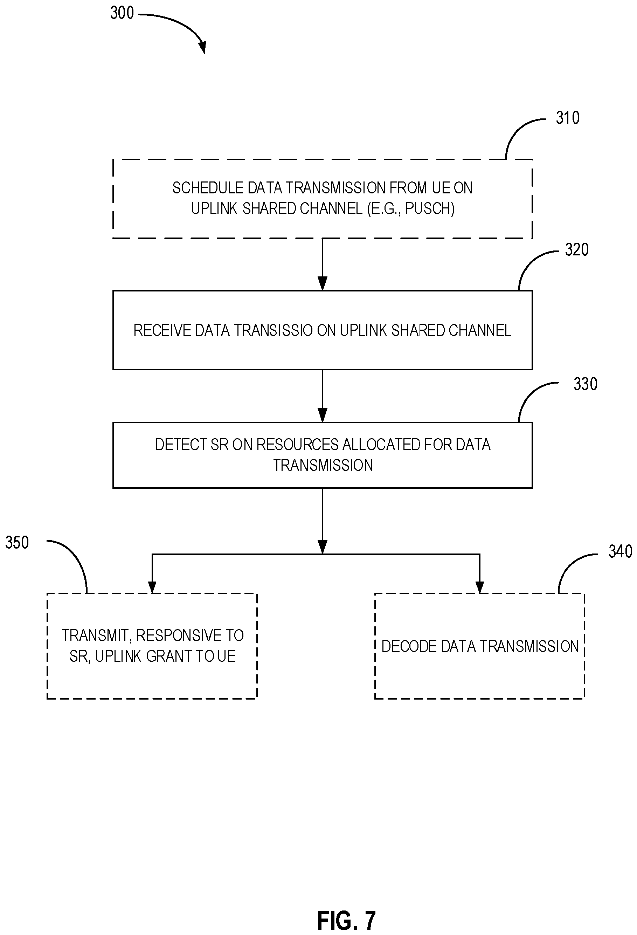

Figure 7 illustrates an exemplary method 300 implemented by a base station 20 according to one embodiment. The base station 20 optionally schedules a data transmission from a UE 30 on an uplink shared channel (block 310). The scheduling includes the allocation of time/frequency resources for the data transmission. The allocated resources may encompass a SR transmission opportunity. The base station 20 subsequently receives a data transmission from the UE 30 on the uplink shared channel (block 320). Where the allocated resources encompass a SR transmission opportunity, the UE 30 may pre-empt the data transmission to transmit a SR on one or more resources allocated for the data transmission. When the UE 30 pre-empts the data transmission to transmit a SR, the base station 20 blindly detects the pre-emptive SR on the resources allocated for the data transmission (block 330).

In some embodiments of the method 300, the base station 20 decodes the pre-empted data transmission based on the detection of the SR (block 340). As one example, the base station 20 sets symbols corresponding to resources on which the pre-emptive SR was received to zero. Setting the symbols to zero reduces the impact of the symbols corresponding to the SR on the decoding of the data transmission.

In some embodiments of the method 300, the base station 20 detects the SR prior to decoding the data transmission on the PUSCH.

In some embodiments of the method 300, the base station 20 blindly detects the pre-emptive scheduling request by correlating a received signal corresponding to a scheduling request transmission opportunity with a known signal (e.g. SR).

In other embodiments of the method 300, the base station 20 blindly detects the pre-emptive scheduling request by decoding a received signal corresponding to a scheduling request transmission opportunity with a known signal and performing error detection on the decoded signal.

In other embodiments of the method 300, the base station 20 transmits, responsive to the SR, an uplink grant to the UE 30 (block 350).

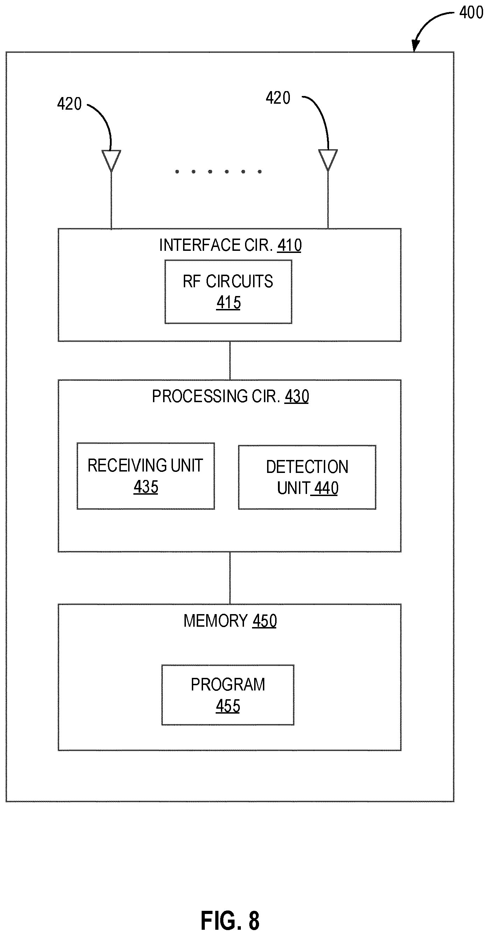

Figure 8 illustrates an embodiment of a base station 400 configured to implement the fast SR transmission methods described above. The base station 400 comprises an interface circuit 410, a processing circuit 430, and memory 450.

The interface circuit 410 is coupled to one or more antennas or antenna elements 420. The interface circuit 410 includes the Radio Frequency (RF) components needed for communicating with the UE 30 over a wireless communication channel. Typically, the RF components includes transmit circuitry and receive circuitry adapted for communications according to the 5G and/or NR standards or other RAT.

The processing circuit 430 processes the signals transmitted to or received by the base station 400. Such processing includes coding and modulation of transmitted signals, and the demodulation and decoding of received signals. The processing circuit 430 includes a receiving unit 435 for receiving a scheduled data transmission form a UE 20 on the PUSCH, and a detection unit 440 for blindly detecting a pre-emptive SR in the data transmission on resources allocated for the PUSCH data transmission.

Memory 450 comprises both volatile and non-volatile memory for storing computer program code and data needed by the processing circuit 430 for operation. Memory 450 may comprise any tangible, non-transitory computer-readable storage medium for storing data including electronic, magnetic, optical, electromagnetic, or semiconductor data storage. Memory 450 stores a computer program 455 comprising executable instructions that configure the processing circuit 430 to implement methods 300 according to Figure 7 as described herein. In general, computer program instructions and configuration information are stored in a non-volatile memory, such as a read only memory (ROM), erasable programmable read only memory (EPROM) or flash memory. Temporary data generated during operation may be stored in a volatile memory, such as a random access memory (RAM). In some embodiments, computer program 455 for configuring the processing circuit 430 as herein described may be stored in a removable memory, such as a portable compact disc, portable digital video disc, or other removable media. The computer program 455 may also be embodied in a carrier such as an electronic signal, optical signal, radio signal, or computer readable storage medium.

## Claims

1. A method implemented by a user equipment (30, 200) for transmitting data on an uplink shared channel, said method comprising:
determining, responsive to the arrival of new transmit data for transmission on an uplink shared channel, that a scheduling request to request uplink resources for transmission of the new transmit data will overlap a scheduled data transmission;
preempting the scheduled data transmission to transmit the scheduling request; and
transmitting the scheduling request to request uplink resources for the new transmit data,
wherein preempting the scheduled data transmission to transmit the scheduling request comprises at least one of:
preempting the scheduled data transmission responsive to determining that a periodicity of a scheduling request interval meets a threshold requirement, preempting the scheduled data transmission responsive to determining that a remaining duration of the scheduled transmission is less than a predetermined time limit, and
preempting the scheduled data transmission depending on a periodicity of a scheduling request interval.

2. The method of claim 1 wherein preempting the scheduled data transmission to transmit the scheduling request comprises preempting the scheduled data transmission responsive to determining that the new transmit data has higher priority than the scheduled uplink transmission.

3. The method of claim 1 wherein preempting the scheduled data transmission to transmit the scheduling request comprises preempting the scheduled data transmission responsive to determining that:
a periodicity of the scheduling request interval is less than a threshold; and
a remaining duration of the scheduled transmission is less than a predetermined time limit.

4. The method of any one of claims 1 - 3 wherein preempting the scheduled data transmission to transmit the scheduling request comprises preempting the scheduled data transmission responsive to determining, based on configuration data, that preemption is allowed.

5. The method of claim 1 wherein preempting the scheduled data transmission to transmit the scheduling request comprises preempting the scheduled data transmission depending on a priority of the new transmit data.

6. The method of claim 5 wherein preempting the scheduled data transmission depending on a priority of the data comprises preempting the scheduled data transmission responsive to determining the new transmit data has higher priority than the scheduled uplink transmission.

7. The method of claim 1 wherein preempting the scheduled data transmission depending on a periodicity of a scheduling request interval comprises preempting the scheduled data transmission responsive to determining that the periodicity of the scheduling request interval meets a threshold requirement.

8. The method of claim 1 wherein preempting the scheduled data transmission depending on a periodicity of a scheduling request interval comprises preempting the scheduled data transmission responsive to determining that:
the periodicity of the scheduling request interval is less than a first threshold; and
a remaining duration of the scheduled transmission is less than a predetermined time limit.

9. The method of any one of claims 1 - 8 wherein preempting the scheduled data transmission to transmit the scheduling request comprises reducing the transmit power allocated for the scheduled transmission.

10. The method of any one of claims 1 - 9 wherein reducing the transmit power allocated for the scheduled transmission comprises reducing a number of resource elements allocated for the scheduled transmission while maintaining a power per resource element for the scheduled transmission.

11. The method of any one of claims 1-10 wherein transmitting the scheduling request to request uplink resources for the new transmit data comprises transmitting the scheduling request on the preempted resource elements no longer used for the scheduled uplink transmission.

12. The method of any one of claims 1 - 8 wherein preempting the scheduled data transmission to transmit the scheduling request comprises reducing a number of resource elements allocated for the scheduled transmission.

13. The method of any one of claims 1-12 wherein transmitting the scheduling request to request uplink resources for the new transmit data comprises transmitting the scheduling request on resource elements no longer used for the scheduled uplink transmission.

14. A user equipment (30, 200) for a wireless communication network configured to:
determine, responsive to the arrival of new transmit data for transmission on an uplink shared channel, that a scheduling request to request uplink resources for transmission of the new transmit data will overlap a scheduled data transmission;
preempt the scheduled data transmission to transmit the scheduling request; and
transmit the scheduling request to request uplink resources for the new transmit data,
wherein to preempt the scheduled data transmission to transmit the scheduling request comprises at least one of:
preempt the scheduled data transmission responsive to determining that a periodicity of a scheduling request interval meets a threshold requirement,
preempt the scheduled data transmission responsive to determining that a remaining duration of the scheduled transmission is less than a predetermined time limit, and
preempt the scheduled data transmission depending on a periodicity of a scheduling request interval.

15. A computer program (255) comprising executable instructions that, when executed by a processing circuit in a user equipment (30, 200) in a wireless communication network, causes the user equipment (30, 200) to perform any one of the methods of claims 1 - 13.

## Patentansprüche

1. Verfahren, das durch eine Benutzerausrüstung (30, 200) zum Übertragen von Daten auf einem geteilten Uplink-Kanal implementiert wird, wobei das Verfahren Folgendes umfasst:
Bestimmen, als Reaktion auf das Eintreffen neuer Übertragungsdaten zur Übertragung auf einem geteilten Uplink-Kanal, dass eine Planungsanforderung zur Anforderung von Uplink-Ressourcen zur Übertragung der neuen Übertragungsdaten, mit einer geplanten Datenübertragung überlappen wird;
Vorwegnehmen der geplanten Datenübertragung zur Übertragung der Planungsanforderung; und
Übertragen der Planungsanforderung zur Anforderung von Uplink-Ressourcen für die neuen Übertragungsdaten;
wobei Vorwegnehmen der geplanten Datenübertragung zum Übertragen der Planungsanforderung zumindest eines des Folgenden umfasst:
Vorwegnehmen der geplanten Datenübertragung als Reaktion auf ein Bestimmen, dass eine Periodizität eines Planungsanforderungsintervalls eine Schwellenbedingung erfüllt,
Vorwegnehmen der geplanten Datenübertragung als Reaktion auf ein Bestimmen, dass eine Restdauer der geplanten Übertragung geringer als ein vorgegebenes Zeitlimit ist, und
Vorwegnehmen der geplanten Datenübertragung abhängig von einer Periodizität eines Planungsanforderungsintervalls.

2. Verfahren nach Anspruch 1, wobei Vorwegnehmen der geplanten Datenübertragung zur Übertragung der Planungsanforderung umfasst, die geplante Datenübertragung als Reaktion auf ein Bestimmen vorwegzunehmen, dass die neuen Übertragungsdaten eine höhere Priorität als die geplante Uplink-Übertragung aufweisen.

3. Verfahren nach Anspruch 1, wobei Vorwegnehmen der geplanten Datenübertragung zur Übertragung der Planungsanforderung umfasst, die geplante Datenübertragung als Reaktion auf ein Bestimmen vorwegzunehmen, dass:
eine Periodizität des Planungsanforderungsintervalls geringer als eine Schwelle ist; und
eine Restdauer der geplanten Übertragung geringer als ein vorgegebenes Zeitlimit ist.

4. Verfahren nach einem der Ansprüche 1 - 3, wobei Vorwegnehmen der geplanten Datenübertragung, um die Planungsanforderung zu übertragen, Vorwegnehmen der geplanten Datenübertragung als Reaktion auf ein Bestimmen, basierend auf Konfigurationsdaten, umfasst, dass eine Vorwegnahme zulässig ist.

5. Verfahren nach Anspruch 1, wobei Vorwegnehmen der geplanten Datenübertragung zur Übertragung der Planungsanforderung umfasst, die geplante Datenübertragung abhängig von einer Priorität der neuen Übertragungsdaten vorwegzunehmen.

6. Verfahren nach Anspruch 5, wobei Vorwegnehmen der geplanten Datenübertragung abhängig von einer Priorität der Daten umfasst, die geplante Datenübertragung als Reaktion auf ein Bestimmen umfasst, dass die neuen Übertragungsdaten eine höhere Priorität als die geplante Uplink-Übertragung aufweisen.

7. Verfahren nach Anspruch 1, wobei Vorwegnehmen der geplanten Datenübertragung abhängig von einer Periodizität eines Planungsanforderungsintervalls umfasst, die geplante Datenübertragung als Reaktion auf ein Bestimmen vorwegzunehmen, dass die Periodizität des Planungsanforderungsintervalls eine Schwellenbedingung erfüllt.

8. Verfahren nach Anspruch 1, wobei Vorwegnehmen der geplanten Datenübertragung abhängig von einer Periodizität eines Planungsanforderungsintervalls umfasst, die geplante Datenübertragung als Reaktion auf ein Bestimmen vorwegzunehmen, dass:
die Periodizität des Planungsanforderungsintervalls geringer als eine erste Schwelle ist; und
eine Restdauer der geplanten Übertragung geringer als ein vorgegebenes Zeitlimit ist.

9. Verfahren nach einem der Ansprüche 1 - 8, wobei Vorwegnehmen der geplanten Datenübertragung zur Übertragung der Planungsanforderung umfasst, die Übertragungsleistung zu verringern, die der geplanten Übertragung zugewiesen ist.

10. Verfahren nach einem der Ansprüche 1 - 9, wobei Verringern der Übertragungsleistung, die der geplanten Übertragung zugewiesen ist, umfasst, eine Anzahl von Ressourcenelementen zu verringern, die der geplanten Übertragung zugewiesen sind, während eine Leistung pro Ressourcenelement für die geplante Übertragung beibehalten wird.

11. Verfahren nach einem der Ansprüche 1 - 10, wobei Übertragen der Planungsanforderung zur Anforderung von Uplink-ressourcen für die neuen Übertragungsdaten umfasst, die Planungsanforderung auf den vorberechtigten Ressourcenelementen zu übertragen, die nicht länger für die geplante Uplink-Übertragung verwendet werden.

12. Verfahren nach einem der Ansprüche 1 - 8, wobei Vorwegnehmen der geplanten Datenübertragung zur Übertragung der geplanten Anforderung umfasst, eine Anzahl von Ressourcenelementen zu verringern, die der geplanten Übertragung zugewiesen sind.

13. Verfahren nach einem der Ansprüche 1 - 12, wobei Übertragen der geplanten Anforderung zur Anforderung von Uplink-Ressourcen für die neuen Übertragungsdaten umfasst, die Planungsanforderung auf Ressourcenelementen zu übertragen, die nicht länger für die geplante Uplink-Übertragung verwendet werden.

14. Benutzerausrüstung (30, 200) für ein drahtloses Kommunikationsnetzwerk, die für Folgendes konfiguriert ist:
Bestimmen, als Reaktion auf das Eintreffen neuer Übertragungsdaten zur Übertragung auf einem geteilten Uplink-Kanal, dass eine Planungsanforderung zur Anforderung von Uplink-Ressourcen zur Übertragung der neuen Übertragungsdaten, mit einer geplanten Datenübertragung überlappen wird;
Vorwegnehmen der geplanten Datenübertragung zur Übertragung der Planungsanforderung; und
Übertragen der Planungsanforderung zur Anforderung von Uplink-Ressourcen für die neuen Übertragungsdaten;
wobei Vorwegnehmen der geplanten Datenübertragung zum Übertragen der Planungsanforderung zumindest eines des Folgenden umfasst:
Vorwegnehmen der geplanten Datenübertragung als Reaktion auf ein Bestimmen, dass eine Periodizität eines Planungsanforderungsintervalls eine Schwellenbedingung erfüllt,
Vorwegnehmen der geplanten Datenübertragung als Reaktion auf ein Bestimmen, dass eine Restdauer der geplanten Übertragung geringer als ein vorgegebenes Zeitlimit ist, und
Vorwegnehmen der geplanten Datenübertragung abhängig von einer Periodizität eines Planungsanforderungsintervalls.

15. Computerprogramm (255), das ausführbare Anweisungen umfasst und das, wenn es von einer Verarbeitungsschaltung in einer Benutzerausrüstung (30, 200) in einem drahtlosen Kommunikationsnetzwerk ausgeführt wird, die Benutzerausrüstung (30, 200) veranlasst, eines der Verfahren nach den Ansprüchen 1 - 13 durchzuführen.

## Revendications

1. Procédé mis en œuvre par un équipement d'utilisateur (30, 200) pour transmettre des données sur une canal partagé de liaison montante, ledit procédé comprenant de :
déterminer, en réponse à l'arrivée de nouvelles données de transmission en vue d'une transmission sur un canal partagé de liaison montante, qu'une demande de programmation pour demander des ressources de liaison montante pour la transmission des nouvelles données de transmission se superposera à une transmission de données programmée ;
préempter la transmission de données programmée pour transmettre la demande de programmation ; et
transmettre la demande de programmation pour demander des ressources de liaison montante pour les nouvelles données de transmission,
dans lequel la préemption de la transmission de données programmée pour transmettre la demande de programmation comprend au moins un de :
préempter la transmission de données programmée en réponse à la détermination qu'une périodicité d'un intervalle de demande de programmation satisfait à une exigence de seuil,
préempter la transmission de données programmée en réponse à la détermination qu'une durée restante de la transmission programmée est inférieure à une limite de temps prédéterminée, et
préempter la transmission de données programmée en fonction d'une périodicité d'un intervalle de demande de programmation.

2. Procédé selon la revendication 1, dans lequel la préemption de la transmission de données programmée pour transmettre la demande de programmation comprend la préemption de la transmission de données programmée en réponse à la détermination que les nouvelles données de transmission ont une priorité plus élevée que la transmission de liaison montante programmée.

3. Procédé selon la revendication 1, dans lequel la préemption de la transmission de données programmée pour transmettre la demande de programmation comprend la préemption de la transmission de données programmée en réponse à la détermination que:
une périodicité de l'intervalle de demande de programmation est inférieure à un seuil ; et
une durée restante de la transmission programmée est inférieure à une limite de temps prédéterminée.

4. Procédé selon une quelconque des revendications 1 à 3, dans lequel la préemption de la transmission de données programmée pour transmettre la demande de programmation comprend la préemption de la transmission de données programmée en réponse à la détermination, sur la base des données de configuration, que la préemption est autorisée.

5. Procédé selon la revendication 1, dans lequel la préemption de la transmission de données programmée pour transmettre la demande de programmation comprend la préemption de la transmission de données programmée en fonction d'une priorité des nouvelles données de transmission.

6. Procédé selon la revendication 5, dans lequel la préemption de la transmission de données programmée en fonction d'une priorité des données comprend la préemption de la transmission de données programmée en réponse à la détermination que les nouvelles données de transmission ont une priorité supérieure à la transmission de liaison montante programmée.

7. Procédé selon la revendication 1, dans lequel la préemption de la transmission de données programmée en fonction d'une périodicité d'un intervalle de demande de programmation comprend la préemption de la transmission de données programmée en réponse à la détermination que la périodicité de l'intervalle de demande de programmation satisfait à une exigence de seuil.

8. Procédé selon la revendication 1, dans lequel la préemption de la transmission de données programmée en fonction d'une périodicité d'un intervalle de demande de programmation comprend la préemption de la transmission de données programmée en réponse à la détermination que :
la périodicité de l'intervalle de demande de programmation est inférieure à un premier seuil ; et
une durée restante de la transmission programmée est inférieure à une limite de temps prédéterminée.

9. Procédé selon une quelconque des revendications 1 à 8, dans lequel la préemption de la transmission de données programmée pour transmettre la demande de programmation comprend la réduction de la puissance de transmission allouée pour la transmission programmée.

10. Procédé selon une quelconque des revendications 1 à 9, dans lequel la réduction de la puissance de transmission allouée pour la transmission programmée comprend la réduction d'un nombre d'éléments de ressource alloués pour la transmission programmée tout en maintenant une puissance par élément de ressource pour la transmission programmée.

11. Procédé selon une quelconque des revendications 1 à 10, dans lequel la transmission de la requête de programmation pour demander des ressources de liaison montante pour les nouvelles données de transmission comprend la transmission de la requête de programmation sur les éléments de ressource préemptés qui ne sont plus utilisés pour la transmission de liaison montante programmée.

12. Procédé selon une quelconque des revendications 1 à 8, dans lequel la préemption de la transmission de données programmée pour transmettre la demande de programmation comprend la réduction d'un nombre d'éléments de ressource alloués pour la transmission programmée.

13. Procédé selon une quelconque des revendications 1 à 12, dans lequel la transmission de la requête de programmation pour demander des ressources de liaison montante pour les nouvelles données de transmission comprend la transmission de la requête de programmation sur des éléments de ressource qui ne sont plus utilisés pour la transmission de liaison montante programmée.

14. Equipement d'utilisateur (30, 200) pour un réseau de communication sans fil configuré pour :
déterminer, en réponse à l'arrivée de nouvelles données de transmission en vue d'une transmission sur un canal partagé de liaison montante, qu'une demande de programmation pour demander des ressources de liaison montante pour la transmission des nouvelles données de transmission se superposera à une transmission de données programmées ;
préempter la transmission de données programmée pour transmettre la demande de programmation ; et
transmettre la demande de programmation pour demander des ressources de liaison montante pour les nouvelles données de transmission,
dans lequel la préemption de la transmission de données programmée pour transmettre la demande de programmation comprend au moins un de :
préempter la transmission de données programmée en réponse à la détermination qu'une périodicité d'un intervalle de demande de programmation répond à une exigence de seuil,
préempter la transmission de données programmée en réponse à la détermination qu'une durée restante de la transmission programmée est inférieure à une limite de temps prédéterminée, et
préempter la transmission de données programmée en fonction d'une périodicité d'un intervalle de demande de programmation.

15. Programme informatique (255) comprenant des instructions exécutables qui, lorsqu'elles sont exécutées par un circuit de traitement dans un équipement d'utilisateur (30, 200) dans un réseau de communication sans fil, amènent l'équipement d'utilisateur (30, 200) à exécuter un quelconque des procédés des revendications 1 à 13.
